# EUROPÄISCHE PATENTSCHRIFT

(11) **EP 1 509 442 B1**
(45) Veröffentlichungstag und Bekanntmachung des Hinweises auf die Patenterteilung: **29.08.2007**
(21) Anmeldenummer: 03740166.8
(22) Anmeldetag: 31.05.2003
(51) Int. Cl.: B62M 7/14, B62K 5/08, B62K 5/04

(54) **FAHRZEUG, ANGETRIEBEN MIT BRENNKRAFTMASCHINE ODER ELEKTROMOTOR**
VEHICLE DRIVEN BY AN INTERNAL COMBUSTION ENGINE OR AN ELECTRIC MOTOR
VEHICULE ENTRAINE PAR UN MOTEUR A COMBUSTION INTERNE OU PAR UN MOTEUR ELECTRIQUE

(30) Priorität: 31.05.2002 DE 10224289
(43) Veröffentlichungstag der Anmeldung: 02.03.2005
(73) Patentinhaber: Schulz, Eberhard, 31137 Hildesheim (DE)
(72) Erfinder: Schulz, Eberhard, 31137 Hildesheim (DE)
(74) Vertreter: Voth, Gerhard
(86) Internationale Anmeldenummer: PCT/EP2003/005721
(87) Internationale Veröffentlichungsnummer: WO 2003/101817

(56) Entgegenhaltungen:
- DE-C- 10 105 743
- FR-A- 628 479
- FR-A- 2 467 764
- US-A- 4 351 410

## Beschreibung

Die Erfindung betrifft ein Fahrzeug, angetrieben mit Brennkraftmaschine oder Elektromotor.

Solche Fahrzeuge sind aus verschiedenen Vorveröffentlichungen bekannt. So zeigt die gattungsgemäße DE 10105743 ein selbstfahrendes Dreirad mit zwei gemeinsamen lenkbaren Vorderrädern. Die Vordergabeln für die Vorderräder sind an jeweils einer Hilfsrahmenanordnung angelenkt. Der Hauptrahmen ist das Mittelteil, in dessen Heckteil ein Hinterrad geführt ist. Ein Fahrersitz sowie ein Beifahrersitz ist jeweils auf dem Hilfsrahmen angeordnet. Die Hilfsrahmen sind parallel zum Hauptrahmen und im gleichen Abstand an diesem etwa höhengleich befestigt.

Ein Nachteil der gesamten Einrichtung liegt darin, dass die Konstruktion ein starres Gebilde ist, welches für die Fahrer schwer zu handhaben ist und keine hohen Kurvengeschwindigkeiten zulässt.

Es ist weiterhin aus der französischen Patentanmeldung 628479 eine Einrichtung bekannt mit zwei parallelen Fahrzeugen, welche nebeneinander herfahren, wobei diese Fahrzeuge über ein Lenkgestänge miteinander verbunden sind. Eines der Fahrzeuge besitzt einen Motor, das andere Fahrzeug ist nicht angetrieben und dient quasi als Beifahrzeug oder Beiwagen. Beide Fahrzeuge sind starr miteinander verbunden. Der Nachteilung dieser Einrichtung liegt darin, dass die Handhabung durch das Verbindungssystem erschwert und durch die Asymmetrie fahrdynamisch kritisch ist.

Aus der US PS 4351410 ist ein Motorrad zu entnehmen mit zwei parallel angeordneten Vorderachsen. Die Stabilisierung dieses Motorrades ist durch die beiden Vorderachsen gewährleistet. Dieses hilft der Person, Welche das Motorrad führt, das Gleichgewicht aufrechtzuerhalten. Auch bei Kurvenfahrten lässt sich das Motorrad in gewisser Weise leicht neigen. Das System ist jedoch äußerst aufwändig und benötigt eine Hydraulikanordnung, die dafür sorgt, dass eine parallele Neigung der beiden Vorderachsen möglich ist.

Der Erfindung liegt die Aufgabe zugrunde, die genannten Nachteile zu vermeiden und ein Fahrzeug zu schaffen, welches hervorragende fahrdynamische Eigenschaften aufweist, hohe Kurvengeschwindigkeiten erzielt und einen besonders einfachen Aufbau benötigt.

Diese Aufgabe wird durch die Merkmale des unabhängigen Anspruchs gelöst.

Der wesentliche Vorteil der Erfindung liegt darin, dass das Fahrzeug aus zwei Hauptrahmen oder Personenträgerrahmen gebildet ist, die derart miteinander verbunden sind, dass sie ohne Weiteres gemeinsam in eine Schräglage übergehen können. Zwischen diesen beiden Hauptrahmen ist eine Antriebseinheit vorgesehen.

Der Vorteil der Erfindung liegt darin, dass es sich um ein voll kurvenneigbares Dreispurfahrzeug handelt. Damit liegt eine Konstruktion vor, die gegenüber starren Dreispurfahrzeugen und / oder gegenüber nur kurvenneigbaren Zweiradfahrzeugen mit starrer Rahmenausführung es ermöglicht, eine oder mehrere Personen zu tragen, wobei diese sich mit dem mittleren Antriebsstrang im gleichen Winkel bei Kurvenfahrt zur Seite neigen können.

Die Besonderheit ist die symmetrische Anordnung aller Bauteile, sowie die symmetrische Anordnung der Personenplätze. Obendrein kann die mitgenommene Personenbelegung asymmetrisch gewählt werden, also: Beifahrer neben dem Fahrer oder Beifahrer hinter dem Fahrer. Das Dreispurfahrzeug kann auch von einer Person (Fahrer) allein bewegt werden.

Das kurvenneigbare Dreispurfahrzeug ist gegenüber neigbaren Zweiradfahrzeugen sowie starren asymmetrischen Zweispurfahrzeugen in folgenden Punkten im Vorteil: Die Symmetrie ergibt ausgewogene Geradeauslauf- und Kurvenstabilität. Bei unterschiedlicher Reifen / Straßen-Haftung (Nässe, Straßenbahnschienen, Spurrillen, Winterwetter) - oder überschreiten der Haftgrenze - ist kein Verunfallen des Dreispurfahrzeuges mehr möglich, da Dreipunktaufstand dynamisch fahrstabil ist.

Hohe Sicherheitsreserven ähnlich 4-Rad-PKW. Ebenso sicher beim Überschreiten der Haftgrenze von übermäßigem Beschleunigen oder Panik-Bremsungen.

Selbst maximale Schräglage bei überzogener Kurvenfahrt ist gefahrlos möglich, da der statische Fahrzustand nach Erreichen der Haftgrenze in einen dynamischen Fahrzustand übergeht. Der Dreipunktaufstand im quasistatischen Fahrzustand lässt kein Kippen des Fahrzeuges zu.

Ist bei maximal erreichter Schräglage immer noch Kurvenkorrektur von Nöten, kann mit Lenkeinschlag nachgebessert werden. Dies ist bei einem normalen Zweiradfahrzeug nicht möglich.

Dementsprechend wurde ein kurvenneigbares Dreispurfahrzeug geschaffen, das bei allen Geschwindigkeiten einschließlich des Stillstands sicher und in einfacher Weise zu handhaben ist, ohne dass Einschränkungen hinsichtlich der Kurvenneigbarkeit in Kauf genommen werden müssen.

Nach den Merkmalen der Ausgestaltung der Erfindung weist der untere Querlenker (U) nach den Gelenken (7,11) einen links und rechts herausragenden Verlängerungsabschnitt (F) auf und ist als Trittbrett für den außenliegenden Fuß des Fahrers gedacht. Für den innen positionierten Fuß ergibt sich das Trittbrett aus dem unteren Querlenker(U) innen, da dieser in seiner Gesamtheit als starre Rechteckplatte ausgebildet ist (Fläche über den Gelenkpunkten 7,11,7',11 '). Durch gleichstarkes Niedertreten des Fahrers auf die Trittbretter außen bzw innen, kann das Dreispurfahrzeug in vertikaler Richtung stabilisiert werden.

Infolge dieser Ausbildung kann der Fahrer den Neigungswinkel bei jeder Geschwindigkeit und auch im Stillstand so beeinflussen, dass er die beiden Trittbretter (F) auf dem unteren Querlenker (U) niedertritt und dadurch in Verbindung über seine Sitzposition auf dem Rahmenteil (L) das Dreispurfahrzeug in eine gegenüber dem stets waagerecht verbleibenden Querlenkern aufgerichtete Mittelstellung drücken. Dies funktioniert nicht nur in der Stillstandstellung oder bei niedriger Fahrgrschwindigkeit; in entsprechender Weise kann der Fahrer auch beim Durchfahren.einer Kurve die durch Körperverlagerung bewirkte Neigung zusätzlich beeinflussen.

Alternativ sieht die Konstruktion konventionelle Fußrasten (F1 und F2) vor, wenn Fahrer oder Beifahrer mehr einen passiven Fahrstil pflegen wollen.

Darüberhinaus befasst sich die Erfindung mit einer Einrichtung zum gewollten Erzielen bestimmter Fahrzustände des Dreispurfahrzeuges.

Dabei kann beispielsweise die Winkeleinstellung des Antiebstranges der mittleren Spur zu der Winkeleinstellung der beiden Rechts-Links-Rahmenteile der äußeren zwei Spuren zur Erzielung einer optimalen Fahrstabilität verändert werden. Ferner ist ein seitenkraftabhängiges Vorspursteuern erzielbar, indem die Längen des oberen Querlenkers 6,8 bzw 8,10 zu den Längen des unteren Querlenkers 7,7' mit 9,9' bzw 9,9'mit 11,11' in einem bestimmten Verhältnis zueinander eingestellt werden. Ein derartiges seitenkraftabhängiges Vorspursteuern lässt sich auch gewissermaßen durch eine elastokinematische Lagerung der Gelenkpunkte an den Querlenkern erzielen, welche zylinderartige Gummielemente aufweisen, die in definierter Richtung eine unterschiedliche Elastizität besitzen.

Schließlich kann das Fahrverhalten auch durch in der Härte steuerbarer Federelemente der federnd aufgehängten Rädern des Dreispurfahrzeuges erfolgen, wobei diese Federelemente in vorteilhafter Weise durch computergesteuerte Stoßdämpfer unterstützt sein können. Schlußendlich - wie in den Unteransprüchen der vollständigkeitshalber auch erwähnt - sollen alle fahrdynamischen Hilfen wie ABS- ESP- und Antischlupf-Regelung im Dreispurfahrzeug zur Anwendung kommen.

Ausführungsbeispiele der Erfindung werden nachfolgend anhand der Zeichnungen näher erläutert. Es zeigen:
- Fig.1: in Seitenansicht das Dreispurfahrzeug mit hinterem Antriebstrang und zwei Vorderrädern;
- Fig.2: das Fahrzeug gemäß Fig. 1 in Draufsicht;
- Fig3: eine Vorderansicht des Fahrzeugs nach Fig. 1 und Fig.2 ;
- Fig.4: die gleiche Ansicht von vorn wie Fig.3, nur in Schräglage bei Kurvenfahrt.
- Fig. 5: Die Darstellung des Fahrzeuges mit einem Fahrer

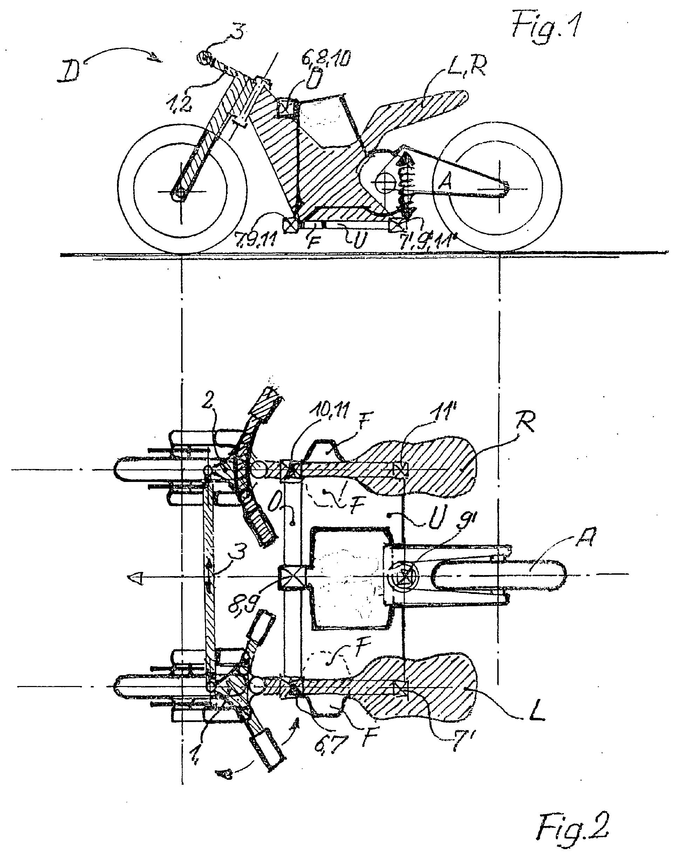

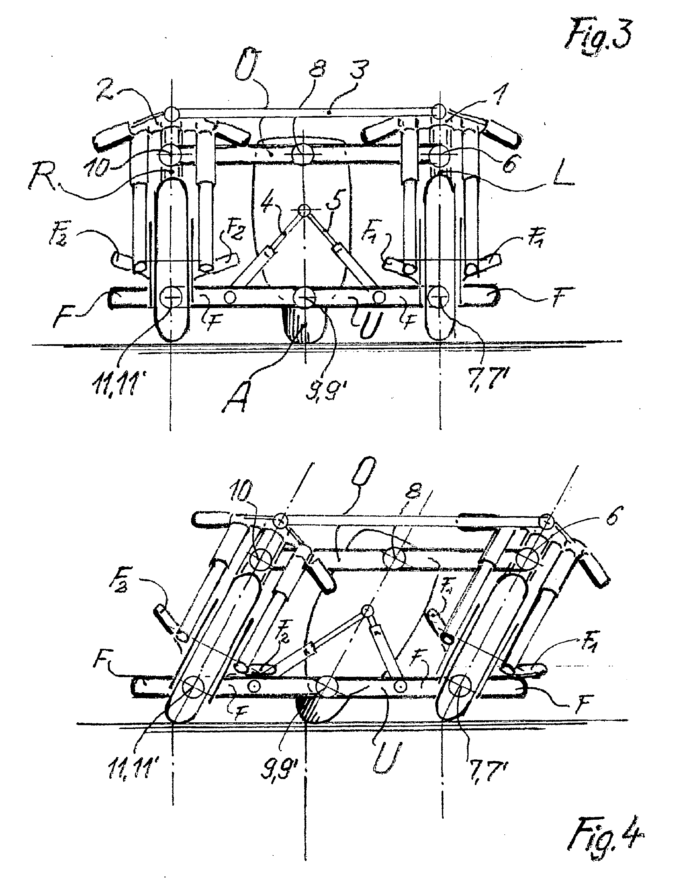

Das Fahrzeug D gemäß Fig.1 bis 4 ist aus einem linken L und rechtem Rahmenteil R mit jeweils einer Vorderradgabel (Spur links und rechts) und einem mittleren Antriebsstrang A mit Hinterrad (= mittlere, dritte Spur) zu einem Dreispurfahrzeug zusammengesetz. Dazu sind Rahmen L und R längsparallel mit einem oberen Querlenker O und mit einem unteren rechteckigen Querlenker U in den Gelenkpunkten oben mit 6, 8 und 10, sowie unten mit den Gelenkpunkten 7,9 und 11 bzw 7',9'und 11'verbunden. Wie aus Fig. 1 bis 4 zu ersehen ist, liegen die Gelenkpunkte 6,7 und 7' in der Radmittenebene des linken Vorderrades, die Gelenkpunkte 8,9 und 9'in der hinteren Radmittenebene des Antriebstrangs A und schließlich die Gelenkpunkte 10,11 und 11'in der Radmittenebene des rechten Vorderrades. Dadurch entsteht eine parallelogrammartige Konstruktion, wie es in Fig.3 bzw .4 durch die gleichen Rahmenabschnitte L mit 6,7 Rahmenabschnitte 10,11 und Abschnitt 8,9 des Antriebstranges A dargestellt ist. Dabei ist es ohne weiteres ersichtlich, dass der Linksrahmen L , der Rechtsrahmen R und der hintere Antriebsstrang A sich im gleichen Maße zur einen oder zur anderen Seite neigen können, wobei die Querlenker O und U ihre ungefähre bodenparallele Lage beibehalten - siehe hierzu auch Fig.4: Neigung des Dreispurfahrzeuges bei Kurvenfahrt.

Der obere Querlenker O ist als torsionssteifes Rohr ausgebildet, während der untere Querlenker U als verdrehsteifes und geschlossenes Rechteck 7, 7',11,11' ausgeführt ist. Wie insbesonders aus Fig.2 zu ersehen ist, sind am Querlenker U außenstehende Verlängerungen links und rechts integriert, sogenannte außenliegende Trittbretter. Innenliegende Trittbrettflächen ergeben sich aus der untern Querlenker-Platte von selbst. Diese beiden jeweils außen-/innenliegenden Trittflächen F werden von der Sitzbank am Rahmen L des Fahrers gut mit den Füßen erreicht (entsprechend Beifahrer auf der rechten Rahmenseite R), um bei Kurvenfahrt wie auch bei Langsamfahrt durch Lihks-Rechts-Drücken der Füße auf die Trittflächen ein dynamisches oder stabilisierendes Moment auf das Dreispurfahrzeug auszuüben. Wenn der Fahrer keine zusätzlichen Stabilisierungsmaßnahmen mittels der Beine durchführen will, kann er seine Füße auch auf die fest mit dem Rahmen L verbundenen Fußstützen F1 stellen.

Aus Fig.2 und 3 ist ersichtlich, wie das Dreispurfahrzeug parallel gelenkt wird: Eine Spurstange 3 ist baugleichlang wie die Querlenker O und U mittels eines Kugelgelenkes an den Lenkhebeln 1 links und 2 rechts gelagert. Lenkhebel 1 und 2 sind gleich lang, sodas der Lenkeinschlag beider Vorderradgabeln absolut gleiche Lenkwinkelausschläge aufzwingt. Dazu ist in Fig. 4 ersichtlich, dass das so ausgelegte Lenkparallelogram (in der Draufsicht = Fig.2) bei Kurvenneigung sich zu den beiden Querlenkern O und U absolut parallel positioniert. Das heißt, dass bei Kurvenfahrt der Lenkwinkeleinschlag beider Vordrradgabeln absolut identisch ist. Bei der Linkslenkervariante lenkt der Fahrer links mit Lenkgestänge 1,2,3 beide Vorderräder parallel bei feststehendem rechtem Lenker am rechten Rahmen R für einen "untätigen" Beifahrer. So ist es auch möglich, das Dreispurfahrzeug nur mit einer Peson (Fahrer links) allein zu bewegen, da Bedienteile wie Gas, Bremse, Schaltung, Kupplung, Zündung und Starter nur links platziert sind. Bei der Rechtslenkervariante ist das ganze spiegelbildlich aufgebaut und damit eine Gleichteilekonstruktion erfüllt.

Aus Fig.3 ist ersichtlich, wie das Dreispurfahrzeug im Stand aufrecht gehalten wird. Eine hydraulische Einrichtung 4,5 am unteren Querlenker U gelenkig gelagert, richtet das Fahrzeug ab Unterfahren einer Grenzgeschwindigkeit (Schritttempo) aus vorrangegangener Schräglage wieder auf. Diese Steuerung wirkt bis zum Erreichen der Geschwindigkeit Null (Stand), um ein Einklappen des Dreispurfahrzeuges zu vermeiden. Diese Einrichtung kann auch in Form einer pneumatischen, elektrischen oder hebelmechanischen Einrichtung ausgelegt sein. Schließlich ist aus Fig.4 ersichtlich, daß diese Enrichtung 4,5 auch die Funktion der Begrenzung des maximalen Neigungswinkels definiert.

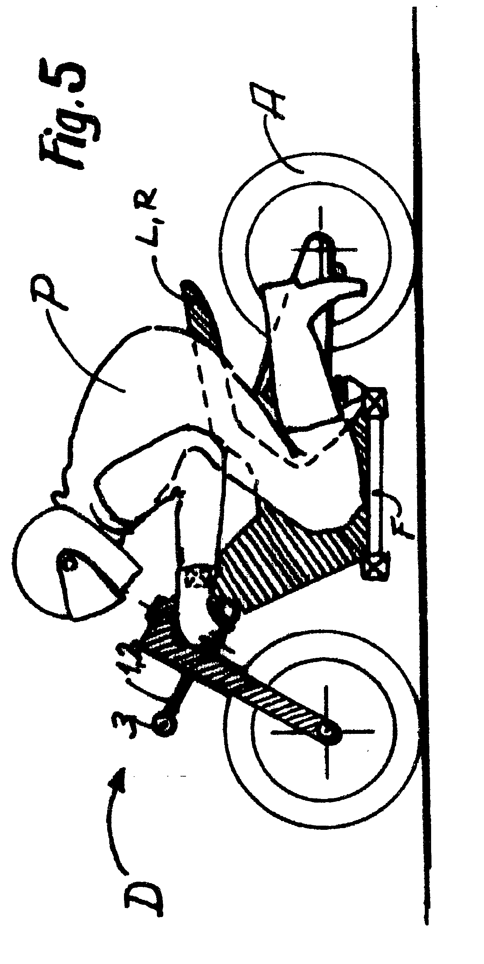

In Figur 5 ist die Seiternansicht des Fahrzeuges dargestellt. Der Fahrer P kann wie ersichtlich eine dynamische Fahrhaltung einnehmen und das Fahrzeug auch bei hohen Geschwindigkeiten sicher beherrschen, Das Fahrzeug vereinigt somit die dynamischen Eigenschaften eines üblichen Motorrades oder einer Rennmaschine mit der Sicherheit eines Personenkraftwagens.

### Weitere Vorteile der Erfindung sind:

Die Standarretierung gibt nach Aufnahme der Fahrt bei der Grenzgeschwindigkeit von ca. 15 km/h ihre Arretierung frei.

Die Konstruktion sieht auch eine Radstandsverlängerung vor, indem die beiden Querlenker (O und U) in Längsrichtung um das Maß der Radstandsverlängerung zunehmen. Ferner ist der Abstand der Gelenkpunkte (6,10) sowie (7,11) in der Spurweite variabel ist. Es bestreht auch die Möglichkeit, daß der Abstand der Gelenkpunkte (8,10) mit (9,11) unterschiedlich lang ist, im Vergleich zu den Gelenkspunkten (6,8) mit (7,9).

Die Gelenkspunkte (6,7,7',8,9,9',10, 11 und 11') sind in elastokinetischen Lagern gelagert.

Die Querlenker (O und U) sind in ihrer Länge verstellbar sind und können während der Fahrt zur Erzielung gewollter Fahrzustände des Dreispurfahrzeugs gesteuert werden.

Die Steuerung der Querlenker kann mittels einer den Neigungswinkel bei Kurvenfahrt und / oder über den Kraftverlauf der Seitenkräfte erfassende Vorrichtung erfolgen.

Die Räder sind über in der Härte steuerbare Federelemente abgestützt oder können rechnergesteuerte Stoßdämpfer haben.

Alle Räder können ABS-gesteuert gebremst werden, wobei das angetriebene Rad antischlupfgesteuert ist. Ferner können alle drei Räder ESP- gesteuert sein.

Das angetriebene Rad wird per Zahnriemen und / oder per Kette und / oder per Kardanantrieb angetrieben, die Kraftübertragung vom Motor erfolgt über ein mechanisches und / oder halbautomatisches und / oder vollautomatisches Getriebe.

Das Rahmenteil (L) mit Lenker und mit Bedienteilen wie Gas, Bremse, Schaltung, Kupplung (= Linkslenkervariante) kann mit dem baugleichen Rahmenteil (R) zur Rechtslenkervariante getauscht werden kann. Ebenso kann der Antriebsstrang samt gefedertem und angetriebenem Hinterrad an den 3 Gelenkspunkten (8,9,9') mit einem ähnlichen Antriebsstrang gewechselt werden.

## Patentansprüche

1. Fahrzeug, angetrieben mit Brennkraftmaschine oder Elektromotor, bestehend aus einem ersten Personenträgerrahmen mit wenigstens einem Laufrad, einem im wesentlichen parallel zu dem ersten Personenträgerrahmen verlaufenden zweiten Personenträgerrahmen mit wenigstens einem weiteren Laufrad, einer zwischen den beiden Personenträgerrahmen angeordneten Antriebseinheit, bestehend aus Motor und Getriebe, **dadurch gekennzeichnet, daß** die Personenträgerrahmen und die Antriebseinheit derart miteinander verbunden sind, dass dieselben bei Kurvenfahrt neigbar sind und im wesentlichen die gleiche Neigung aufweisen.

2. Fahrzeug nach Anspruch 1, wobei die Personenträgerrahmen zwei im wesentlichen baugleiche Rahmen sind mit jeweils einer Sitzbank, einer Lenkung, einem gefederten Vorderrad und einem Lenkkopf, die mit je einem waagerechten oberen und unteren Querlenker verbunden sind, wobei annähernd in der Mitte zwei weitere Gelenkpunkte für die Antriebseinheit vorgesehen sind.

3. Fahrzeug nach Anspruch 1, wobei die Antriebseinheit eine gefederte Hinterradschwinge mit Antrieb und Hinterrad aufweist.

4. Fahrzeug nach einem der vorherigen Ansprüche, wobei mindestens zwei Querlenker in der Höhe versetzt und mindestens zwei weitere in der Fahrtrichtung versetzt angeordnet sind.

5. Fahrzeug nach einem der vorherigen Ansprüche, dass die Rahmenteile der Personenträgerrahmen baugleiche Teile sind und mit jeweils einer Mehrpersonensitzbank ausgerüstet sind.

6. Fahrzeug nach einem der vorherigen Ansprüche, wobei Fuß- oder Kniestützen für die Personen am jeweiligen Personenträgerrahmen angeordnet sind.

7. Fahrzeug nach einem der vorherigen Ansprüche, wobei Fußstützen oder Kniestützen fahrzeugstabilisierend auf dem unteren Querlenker der Verbindung zwischen den Personenträgerrahmen angebracht sind.

8. Fahrzeug nach einem der vorherigen Ansprüche, wobei die Vorderräder der Personenträgerrahmen mit Lenkhebel und Spurstange spurparallel geführt sind.

9. Fahrzeug nach einem der vorherigen Ansprüche, wobei bei einer Standstellung eine hydraulische, pneumatische, elektrische oder mechanische Einrichtung zwischen Antriebseinheit und einem unteren Lenker derart angeordnet ist, dass das Fahrzeug im Stand senkrecht arretiert werden kann.

## Claims

1. Vehicle, driven with thermic engine or electric motor, consisting in a first person-supporting frame with at least one running wheel, a second person-supporting frame extending substantially in parallel with the first person-supporting frame with at least one further running wheel, a drive unit arranged between the two person-supporting frames, consisting in motor and gear, in which the person-supporting frames and the drive unit are connected with each other in such a way that they can be inclined at an essentially identical angle while riding in curves.

2. Vehicle according to claim 1, in which the person-supporting frames are two frames substantially of the same construction with each having a bench, a steering gear, a spring mounted front wheel and a steering head, each connected to a horizontal upper and lower wishbone, and roughly in the center two further joint points for the drive unit are provided.

3. Vehicle according to claim 1, in which the drive unit comprises a spring mounted back wheel rocker with drive and back wheel.

4. Vehicle according to one of the previous claims, in which at least two wishbones are arranged displaced in the height and at least two further ones displaced in the drive direction.

5. Vehicle according to one of the previous claims, where the frame parts of the person-supporting frames are of the same construction and each are equipped with a multi-person bench.

6. Vehicle according to one of the previous claims, in which footrests or knee supports for the persons are arranged on the respective person-supporting frame.

7. Vehicle according to one of the previous claims, in which footrests or knee supports are applied in a vehicle stabilising way on the lower wishbone of the link between the person-supporting frames.

8. Vehicle according to one of the previous claims, in which the front wheels of the person-supporting frames with steering arms and tie rod are directed in parallel to the track.

9. Vehicle according to one of the previous claims, in which in a standstill a hydraulic, pneumatic, electrical or mechanical device between the drive unit and a lower handlebar is arranged in such a way that the vehicle can be blocked in the standstill perpendicularly.

## Revendications

1. Véhicule entraîné par un moteur à combustion interne ou par un moteur électrique, constitué d'un premier cadre porteur de personnes avec au moins une roue, un second cadre porteur de personnes qui s'étend pour l'essentiel parallèlement au premier cadre porteur de personnes avec au moins une roue supplémentaire, une unité de propulsion disposée entre les deux cadres porteurs de personnes, constitué par le moteur et l'engrenage, **caractérisé par le fait que** les cadres porteurs de personnes et l'unité de propulsion sont liés entre eux de façon que ceux-ci sont inclinables dans les courbes et présentent essentiellement la même inclinaison.

2. Véhicule selon la revendication 1, où les cadres porteurs de personnes sont essentiellement deux cadres du même type de construction, chacun de ceux-ci ayant une banquette, une direction, une roue antérieure amortisée et une tête de direction, chacune étant reliée à un bras transversal, horizontal supérieur et inférieur, où sont prévus environ dans le centre deux autres points d'articulation pour l'unité de propulsion.

3. Véhicule selon la revendication 1, où l'unité de propulsion présente un bras oscillant postérieur amortisé avec propulsion et roue postérieure.

4. Véhicule selon l'une des revendications précédentes, où au moins deux bras oscillants transversaux sont disposés en décalage en hauteur et au moins deux autres sont ensuite disposés en décalage dans la direction de course.

5. Véhicule selon l'une des revendications précédentes, où les parties de cadre des cadres porteurs de personnes sont des parties du même type de construction, chacune étant outillée d'une banquette pour plusieurs personnes.

6. Véhicule selon l'une des revendications précédentes, où des appuis pour genou ou pour pied de personnes sont disposés sur le relatif cadre porteur de personnes.

7. Véhicule selon l'une des revendications précédentes, où des appuis pour pied ou des appuis pour genou sont appliqués de façon stabilisante pour le véhicule sur le bras transversal inférieur de la liaison entre les cadres porteurs de personnes.

8. Véhicule selon l'une des revendications précédentes, où les roues antérieures des cadres porteurs de personnes sont guidées de façon parallèle avec le levier de guidage et la biellette.

9. Véhicule selon l'une des revendications précédentes, où dans une position fermée une installation hydraulique, pneumatique, électrique ou mécanique est disposé entre l'unité de propulsion et un volant inférieur de façon telle que le véhicule puisse être bloqué verticalement en position fermée.
